(19) Europäisches Patentamt
European Patent Office
Office européen des brevets

(11) EP 3 547 682 B1

(12) **EUROPEAN PATENT SPECIFICATION**

(45) Date of publication and mention of the grant of the patent:
**22.05.2024 Bulletin 2024/21**

(21) Application number: **19164138.0**

(22) Date of filing: **20.03.2019**

(51) International Patent Classification (IPC):
***H04N 25/61*** *(2023.01)* ***G06T 5/80*** *(2024.01)*
***H04N 13/239*** *(2018.01)* ***H04N 13/271*** *(2018.01)*

(52) Cooperative Patent Classification (CPC):
**H04N 13/239; G06T 5/80; H04N 13/271;**
**H04N 25/61;** G06T 2207/10012; H04N 23/951

(54) **STEREO IMAGE CAPTURE APPARATUS**

STEREOBILDERFASSUNGSVORRICHTUNG

APPAREIL DE CAPTURE D'IMAGES STÉRÉO

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.03.2018 JP 2018066447**

(43) Date of publication of application:
**02.10.2019 Bulletin 2019/40**

(73) Proprietor: **Ricoh Company, Ltd.**
**Tokyo 143-8555 (JP)**

(72) Inventor: **KISHIWADA, Jun**
**Tokyo, 143-8555 (JP)**

(74) Representative: **J A Kemp LLP**
**80 Turnmill Street**
**London EC1M 5QU (GB)**

(56) References cited:
**JP-A- 2012 198 077**
**US-A1- 2004 257 677**
**US-A1- 2013 070 068**
**US-B2- 8 854 359**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Processed by Luminess, 75001 PARIS (FR)

**Description**

Technical Field

This disclosure relates to a stereo image capture apparatus.

Background

Background Art

Monitoring devices using a stereo camera employing a pair of cameras have been applied to various fields, such as vehicle-mounted cameras to calculate a range or distance to an object using three-dimensional measurement techniques. The three-dimensional measurement techniques can be performed using the stereo method, in which a pixel block in one image of the object captured by one camera and a corresponding pixel block in another image of the object captured by another camera are identified, and then data of distance to the object is calculated using the principle of triangulation based on disparity of the two images, which corresponds to a relative displacement amount of the two images. The distance to the object can be measured by using the calculated distance data, and the measured distance can be used to assist driving of vehicles such as vehicle-to-vehicle distance control. Further, in addition to information on the front side of vehicles, a demand for wider field of view (vision) for detecting another vehicle coming from the side of the vehicles and for detecting pedestrian at an intersection on the road has been increasing.

Japanese Patent Application Publication No. 2012-198077 (JP-2012-198077-A) discloses a stereo image capture apparatus that generates disparity images. The stereo image capture apparatus includes two image capture units, two optical systems, a first image generation unit, a second image generation unit, a first disparity image generation unit, a second disparity image generation unit, and an image synthesizing unit. As to the two image capture units, optical axes of the two image capture units are arranged in parallel. The two optical systems project image data captured by the two image capture units as equidistant projection images. The first image generation unit generates first modified image data and second modified image data, in which the epipolar line becomes a straight line from the two equidistant projection images. The second image generation unit generates third modified image data and fourth modified image data, in which the magnification of the third modified image data and fourth modified image data is larger than the magnification of the first modified image data and the second modified image data and the epipolar line becomes a straight line from a given region of the two equidistant projection images. The first disparity image generation unit compares the first modified image data and the second modified image data to generate a first disparity image, in which disparity information is set on each pixel. The second disparity image generation unit compares the third modified image data and the fourth modified image data to generate a second disparity image, in which disparity information is set on each pixel. The image synthesizing unit replaces a pixel value of the pixel of the first disparity image, determined by the first modified image data or the second modified image data and the magnification of third modified image data or the fourth modified image data with a pixel value of the pixel of the second disparity image.

However, in the conventional monitoring apparatus using the stereo camera, if the field of view is set wider, it is difficult to secure the higher detection accuracy at a far side in a telephoto region, and if the detection accuracy at the far side is prioritized, the processing load of data (e.g., image sensor resolution) increases too much. If the measurement accuracy at the far side is prioritized, the system cost increases and the distance between the two cameras is increased, with which the size of system increases.

For example, as to the stereo image capture apparatus of JP-2012-198077-A, since the equidistant projection image is used as original image data to be processed by the image processing, the processing load increases, and processing delay occurs due to the increase of image correction amount, and further, errors, which might occur during the correction fitting, might increase. Further, compared to the central projection image, the angular resolution of the original image data becomes lower.

US 2004/257677 A1 discloses a stereo image capture apparatus in accordance with background art.

SUMMARY

As one aspect of the present invention, a stereo image capture apparatus according to claim 1 is devised

As to the above described aspects of the present invention, the stereo image capture apparatus that can secure a field of view in the wide-angle region, secure the higher detection accuracy at a far side in the telephoto region, and implement a size-reduction and a cost reduction can be provided.

BRIEF DESCRIPTION OF THE DRAWINGS

A more complete appreciation of the description and many of the attendant advantages and features thereof can be readily obtained and understood from the following detailed description with reference to the accompanying drawings, wherein:

FIG. 1 illustrates a scheme of a principle of measuring a range to an object using a stereo camera including two cameras arranged in parallel;
FIGs. 2A and 2B (FIG. 2) illustrate a scheme of a central projection and an equidistant projection;
FIG. 3 illustrates an example of a hardware block diagram of a stereo image capture apparatus according to an embodiment;
FIG. 4 is an example of a schematic diagram illustrating a telephoto region and a wide-angle region partitioned by a lens (first optical system, second optical system);
FIG. 5 is an example of a profile illustrating a distortion characteristic of a lens (first optical system, second optical system);
FIG. 6 is an example of a profile illustrating a distortion characteristic corresponding to a projection method (central projection) of a telephoto region of FIG. 5;
FIG. 7 is an example of a profile of a distortion change amount in a distortion characteristic;
FIG. 8 is an example of a profile of a distortion change rate in a distortion characteristic;
FIG. 9 illustrates an example of a cross-sectional view of a configuration of a lens (first optical system, second optical system);
FIGs. 10A, 10B, and 10C (FIG. 10) are examples of aberration diagrams of the lens (first optical system, second optical system) in FIG. 9;
FIG. 11 illustrates an example of a functional block diagram of the stereo image capture apparatus; and
FIG. 12 illustrates a scheme of an image processing performed by the stereo image capture apparatus according to an embodiment.

The accompanying drawings are intended to depict embodiments of the present invention and should not be interpreted to limit the scope thereof. The accompanying drawings are not to be considered as drawn to scale unless explicitly noted.

DETAILED DESCRIPTION

A description is now given of exemplary embodiments of the present inventions. It should be noted that although such terms as first, second, etc. may be used herein to describe various elements, components, regions, layers and/or units, it should be understood that such elements, components, regions, layers and/or units are not limited thereby because such terms are relative, that is, used only to distinguish one element, component, region, layer or unit from another region, layer or unit. Thus, for example, a first element, component, region, layer or unit discussed below could be termed a second element, component, region, layer or unit without departing from the teachings of the present inventions.

In addition, it should be noted that the terminology used herein is for the purpose of describing particular embodiments only and is not intended to be limiting of the present inventions. Thus, for example, as used herein, the singular forms "a", "an" and "the" are intended to include the plural forms as well, unless the context clearly indicates otherwise. Moreover, the terms "includes" and/or "including", when used in this specification, specify the presence of stated features, integers, steps, operations, elements, and/or components, but do not preclude the presence or addition of one or more other features, integers, steps, operations, elements, components, and/or groups thereof.

FIG. 1 illustrates a scheme of a principle of a range finding (distance measurement) using a stereo camera including a first camera C0 (left camera) and a second camera C1 (right camera) arranged in parallel. As illustrated in FIG. 1, the first camera C0 and the second camera C1 are disposed by setting a distance B between the first camera C0 and the second camera C1. The focal point length, the optical center, and the image capture plane of the first camera C0 and the second camera C1 are defined as follows.

focal point length: f
optical center: $O_0$, $O_1$
image capture plane: $s_0$, $s_1$

As to the first camera C0, an image of an object A, located at a distance "d" from the optical center $O_0$ of the first camera C0, is focused at a point $P_0$ that is an intersection of a straight line A-$O_0$ and the image capture plane $s_0$.

Further, as to the second camera C1, an image of the same subject A is focused at a point Pi on the image capture plane si. In this configuration, an intersection point of a straight line passing the optical center $O_1$ of the second camera C1, parallel to the straight line A-$O_0$, and the image capture plane si is defined as $P_0$', and then the distance between the point $P_0$' and the Pi on the image capture plane si is defined as "p."

The point $P_0$' in the second camera C1 corresponds to the same position of the point $P_0$ in the first camera C0, and the distance "p" indicates a displacement amount of the positions on two images of the same object A captured by the two cameras (first camera C0 and the second camera C1), which is referred to as disparity. Since a triangle "A-$O_0$-$O_1$" and a triangle "$O_1$-$P_0$'-$P_1$" are similar, the relationship of "d = Bf/p" is obtained. Therefore, if the distance B (baseline length) and the focal point length "f" of the first camera C0 and the second camera C1 are known, the distance "d" can be calculated using the disparity "p."

The image focusing optical system of the stereo camera projects an image of an object outside the stereo camera onto the image capture plane. The image focusing optical system of the stereo camera employs various methods depending on how the object at one position (direction) is projected onto a position on the image capture plane. Hereinafter, the central projection and the equidistant projection, which are typically used, are described.

FIG. 2A is an example of a diagram illustrating a central projection. The central projection is a method of projecting an image of an object located in a direction away from the camera optical axis for an angle $\theta$ at a position distanced from the center of the image capture plane (the intersection point with the optical axis) for $f\times\tan\theta$. In this case, "f" indicates the focal point length of the image focusing optical system.

The central projection has a feature that a straight line in a three-dimensional space is projected as a straight line on an image. Typically, camera lenses are designed to have the central projection characteristic. In particular, as to the stereo camera, since the epipolar line becomes a straight line, searching of the corresponding point can be easily performed, which is a significant advantage. However, since $\tan\theta$ diverges at $\theta$ = 90 degrees, the field of view at 90 degrees or more cannot be projected, and when the field of view of wider angle close to 90 degrees is to be projected, a very wide image capture plane is required.

FIG. 2B is an example of a diagram illustrating the equidistant projection. The equidistant projection employs a method of projecting an image of an object located in a direction away from the camera optical axis for an angle $\theta$ at a position distanced from the center of the image capture plane for $f\times\theta$.

Different from the central projection, the equidistant projection does not diverge at 90 degrees, and can express a wider field of view. Therefore, many fisheye lenses employ this characteristic. However, in the stereo camera using the equidistant projection, the epipolar line becomes a curve so that searching of the corresponding point becomes complicated.

In the conventional stereo camera system, the central projection (FIG. 2A) is typically used. This is because the epipolar line is defined as the straight line, and the distance conversion can be easily calculated by the following formula (1) using the disparity.

$$d = Bf/p \qquad (1)$$

wherein

"d" denotes a distance (d: distance),
"B" denotes a baseline length that is the distance between two cameras (B: baseline length),
"f" denotes a focal point length (f: focal point length), and
"p" denotes disparity (p: disparity).

With the increasing demand of wider angle of view, the total angle of view of the stereo camera system is being demanded to be, for example, 100 degrees or more. As to the central projection, the relationship between the image height and the angle of view is defined by the following formula (2), in which the wider the angle of view, the larger the required image height.

$$y = f\times\tan\theta \qquad (2)$$

wherein "y" denotes the image height (y: image height),

"f" denotes the focal point length (f: focal point length), and
"0" denotes the angle of view ($\theta$: angle of view).

As indicated in the formula (2), the image height "y" can be reduced by reducing the focal point length "f." However, if the image height "y" is reduced, a value of the disparity "p" defined by the formula (1) becomes smaller, with which it becomes difficult to secure the accuracy of distance measurement at a far side. Further, if the image height "y" is reduced, the angle resolution at the center of the image decreases, and the size of the object in the center of the image becomes smaller, with which it becomes difficult to detect an object, such as an obstacle object, at the far side.

The above described stereo image capture apparatus of JP-2012-198077-A proposes a method of correcting an equidistant projection image to a central projection image, but the correction amount might become too large. For example, a case where an image height of an equidistant projection having the focal point length of 2 mm is corrected to a center projection having a focal point length of 5 mm is considered. If the sensor pitch is 0.00375 mm and the image height of 10 degrees in the vertical direction is corrected, an image correction amount of about 142 pixels is required. If the image correction amount increases, the amount of data to be buffered increases, with which the circuit resource becomes larger, the processing device becomes expensive, and the processing delay may occur due to the increased processing load. Further, due to the increase of the image correction amount, errors that might occur during the correction fitting may increase.

The stereo image capture apparatus according to the present invention employs a configuration, which can solve the above described problem, which is regarded as an important technical problem. Specifically, the stereo image capture apparatus includes two cameras such as a right-side camera and a left-side camera, and two regions such as a telephoto region and a wide-angle region are set for each one of the cameras, in which the telephoto region is used for the center projection and set with a lower distortion optical property so as to reduce the amount of correction, and the wide-angle region is set with a distortion characteristic such that a target angle of view can be set. The image correction is performed for each of the two regions such as the telephoto region and the wide-angle region respectively to generate an image at each of the telephoto region and the wide-angle region. By performing the stereo matching to a pair of images in the telephoto region generated by using the right-side camera and the left-side camera, three-dimensional data of telephoto region can be obtained, and by performing the stereo matching to a pair of images in the wide-angle region generated by using the right-side camera and the left-side camera, three-dimensional data of wide-angle region can be obtained. In this configuration, by performing the image capturing using the central projection optical system in the telephoto region, the original data having the higher angular resolution and lower distortion can be obtained, with which the amount of image correction and the error that might occur during the image correction can be reduced, and the processing can be implemented using the smaller circuit resource.

FIG. 3 is a schematic configuration of a stereo image capture apparatus 100 according to an embodiment. The stereo image capture apparatus 100 includes, for example, a camera unit 110, which includes a left-side camera C0 (first camera) and a right-side camera C1 (second camera) disposed in parallel. The left-side camera C0 and the right-side camera C1 employ the same lens and the same image sensor, such as complementary metal-oxide-semiconductor (CMOS) image sensor. The left-side camera C0 and the right-side camera C1 are arranged so that their respective optical axes are set parallel to each other and the two image capture planes are set in the same plane. As illustrated in FIG. 3, the left-side camera C0 includes, for example, a lens 21-0 (first optical system), a diaphragm 22-0, and a CMOS image sensor 23-0 (first image capture device) while the right-side camera C1 includes, for example, a lens 21-1 (second optical system), a diaphragm 22-1, a CMOS image sensor 23-1 (second image capture device). As illustrated in FIG. 3, the same parts are used in each of the left-side camera C0 and the right-side camera C1, such as the lenses 21-0 and 21-1 and the CMOS image sensors 23-0 and 23-1.

The CMOS image sensor 23 operates when a control signal output by a camera control unit 13 is input. The CMOS image sensor 23 can be, for example, a monochrome image sensor having 1000 pixels × 1000 pixels. The lens 21, for example, has an angle of view of 80 degrees at each of the upper side, lower side, left side, and right side, which means a field of view of 160 degrees for the upper and lower, and an angle of view of160 degrees for the left side and right side, and has a property of forming an image in the angle of view of 160 degrees within an image capture region of the CMOS image sensor 23.

The image signal output from the CMOS image sensor 23 is output to a correlated double sampling (CDS) 24 to remove the noise by performing the correlated double sampling, then a gain of the image signal is controlled in accordance with the signal strength by an automatic gain control (AGC) 25, and then the analog-digital (A/D) conversion of the image signal is performed by an analog-digital (A/D) converter 26. Then, the image signal is stored in a frame memory 27 capable of storing all of image signals received from the CMOS image sensor 23.

The image signals stored in the frame memory 27 are used in a digital signal processing unit 28 to calculate the distance or the like, and performs the image format conversion depending on the design specification to display the image on a device, such as a liquid crystal display (LCD). The digital signal processing unit 28 is, for example, a large-scale integration (LSI) including a digital signal processor (DSP), a central processing unit (CPU), a read only memory (ROM), a random access memory (RAM), or the like. For example, a functional block, to be described later, is implemented by the digital signal processing unit 28 using hardware, software, or combination of hardware and software. Further, the camera control unit 13 can be disposed in the digital signal processing unit 28, and the configuration illustrated in FIG.

3 is just one example.

The digital signal processing unit 28 outputs each pulse of horizontal synchronizing signal HD, vertical synchronizing signal VD, and clock signal to the camera control unit 13. Alternatively, the camera control unit 13 can be configured to generate the horizontal synchronizing signal HD and the vertical synchronizing signal VD. The camera control unit 13, including a timing generator and a clock driver, generates a control signal for driving the CMOS image sensor 23 from the horizontal synchronizing signal HD, the vertical synchronizing signal VD, and the clock signal.

As above described, the stereo image capture apparatus 100 includes the CMOS image sensor 23-0 (first image capture device) and the lens 21-0 (first optical system) that projects the image data captured by the CMOS image sensor 23-0 (first image capture device) for the left-side camera C0, and the CMOS image sensor 23-1 (second image capture device) and the lens 21-1 (second optical system) that projects the image data captured by the CMOS image sensor 23-1 (second image capture device) for the right-side camera C1.

The lens 21 (first optical system, second optical system) projects the image data onto the telephoto region and the wide-angle region set on the CMOS image sensor 23 (first image capture device, second image capture device), and has a distortion characteristic that the distortion is relatively set smaller in the telephoto region and the distortion is set relatively larger in the wide-angle region.

FIG. 4 is a schematic view illustrating an example of the telephoto region and the wide-angle region partitioned by the lens 21 (first optical system, second optical system). The image data captured by the CMOS image sensor 23 (first image capture device, second image capture device) has a rectangular image capture region, in which the image capture region is partitioned into a central portion of the image capture region set for the telephoto region, and a peripheral portion of the image capture region set for the wide-angle region. In an example case of FIG. 4, the telephoto region at the central portion depicts a scene viewed from a vehicle, including a road and a road sign, and the wide-angle region at the peripheral portion is drawn with a gradation pattern that simplifies the wide-angle region. A ratio and arrangement pattern of the telephoto region and the wide-angle region occupying the image capture region can be changed freely, and various design changes can be made.

Hereinafter, a description is given of the distortion characteristic of the lens 21 (first optical system, second optical system) in detail with reference to FIGs. 5 to 8.

FIG. 5 is a schematic diagram illustrating an example of the distortion characteristic of the lens 21 (first optical system, second optical system), which is a characteristic of the image height relative to the angle of view. In this case, a sensor of type 1/3 (image sensor) is used, in which a diagonal image height is set to 3 mm, a sensor pitch is set to 0.00375 mm, and a resolution is set with 1280 pixels $\times$ 960 pixels (horizontal $\times$ vertical). In the distortion characteristic of FIG. 5, an image height of 0 mm to 1.5 mm is defined as the telephoto region, and an image height of 1.5 mm to 3.0 mm is defined as the wide-angle region. In the telephoto region, an image height characteristic of the central projection having a focal point length of 5 mm is provided, and in the wide-angle region, an image height characteristic of the equidistant projection having a focal point length of 1.5 mm is provided. By providing these image height characteristics, it is possible to secure the field of view of 140 degrees or more for the entire image while securing a higher angle resolution of about 0.04 deg/pixel in the telephoto region.

If the field of view of 140 degrees or more is to be secured by simply applying the center projection, the focal point length is required to be reduced into about 1 mm, but in this case, the angle resolution at the center of image is reduced to about 0.2 deg/pixel. The reason of applying the projection system of equidistant projection in the wide-angle region is to set a constant angle resolution regardless of the image height. Further, it can set a characteristic of the center projection having a smaller focal point length, and it can set a higher angular resolution at the center as much as possible in the wide-angle region by using an orthogonal projection. The image height characteristic can be represented by the following formulas (3) and (4).

$$y = f \times \tan\theta \ (y \leq a) \qquad (3)$$

$$y = f\theta + B \ (y > a) \qquad (4)$$

wherein "y" denotes the image height,

"f" denotes the focal point length,
"0" denotes the angle of view,
"B" denotes the baseline length (distance between two cameras), and
"a" denotes the image height used as a boundary between the telephoto region and the wide-angle region (e.g., 1.5 mm in the above example).

FIG. 6 is a schematic diagram illustrating an example of the distortion characteristic in accordance with the projection method (central projection) of the telephoto region in FIG. 5. As illustrated in FIG. 6, the distortion in the telephoto region is reduced to substantially zero (set relatively smaller), and the distortion increases rapidly from a point that enters into the wide-angle region (set relatively larger).

In the above description, in order to facilitate the understanding of the present invention, the characteristics of the ideal (theoretical) center projection and equidistant projection have been described, but actual real stereo cameras may cause distortion due to distortion aberration. Even if the distortion occurs due to the distortion aberration, it is preferable that the distortion in the telephoto region is equal to or less than 1 percent (%). By maintaining the distortion in the telephoto region at 1% or less, the correction amount of the "x" image height and the correction amount of the "y" image height can be reduced to 10 pixels or less.

In other words, the lens 21 (first optical system, second optical system) is preferably employs the distortion characteristic that can satisfy the following condition formulas (X) and (Y) in the telephoto region. By satisfying the condition formulas (X) and (Y), the distortion occurred in the telephoto region can be reduced to very small, and the distortion correction amount of the telephoto region to be processed in the image processing, to described later, can be reduced. As a result, the stereo image capture apparatus 100 reducing the size and cost (smaller system cost) can be implemented. Further, the shorter latency and higher precision of the image processing to be described later can be achieved.

$$(xD/100)/s < 10 \qquad (X)$$

$$(yD/100)/s < 10 \qquad (Y)$$

wherein,

"x" denotes an image height in the x axis, in mm,
"y" denotes an image height in the y axis, in mm,
"D" denotes distortion, in percent (%), and
"s" denotes the sensor pitch of CMOS image sensor 23 (first image capture device, second image capture device).

As described above, the distortion characteristic of the lens 21 (first optical system, second optical system) changes greatly at the image height changing from the telephoto region to the wide-angle region (increasing rapidly). That is, near a specific image height where the region changes from the telephoto region to the wide-angle region, the change of distortion amount caused by a change of the image height becomes a maximum. The distortion amount described for defining the telephoto region and wide-angle region can be used as a threshold, or the image height at the rising edge of the distortion can be defined as a boundary between the telephoto region and the wide-angle region. As a method of calculating the rising image height, the absolute value of distortion change amount is calculated and a point indicating the maximum value of the distortion change amount can be set as the rising image height, or an approximated line, such as approximated straight line or approximated curve (tangent), can be calculated from plots before and after the rising image height, and a point where the approximated line intersects with the distortion axis (distortion is zero) can be used as the rising image height.

FIG. 7 is a schematic diagram illustrating an example of the distortion change amount in the distortion characteristic. In an example case of FIG. 7, the image height calculated from the maximum value of the distortion change amount is 1.62 mm while the image height calculated from the intersection of the approximated straight line and the distortion axis is 1.49 mm. In a case of this distortion characteristic, if the image height calculated from the maximum value of the distortion change amount is set as the boundary, it is necessary to correct the distortion of about 5% (maximum) for the image height at the peripheral image of the telephoto region. On the other hand, if the image height calculated from the intersection of the approximated straight line and the distortion axis is set as the boundary, the occurring distortion is about 1%. In order to cope with the gradually rising distortion characteristic, the distortion change rate illustrated in FIG. 8 can be used in place of the distortion change amount illustrated in FIG. 7. FIG. 8 is a schematic diagram illustrating an example of the distortion change rate in the distortion characteristic.

The telephoto and wide-angle regions can be partitioned based on the following criteria (A) to (E).

(A) The telephoto region and the wide-angle region can be partitioned using 1% of distortion in the distortion characteristic as the boundary. In this case, the distortion occurred in the telephoto region can be reduced to very small, and the distortion correction amount of the telephoto region to be processed in the image processing, to described later, can be reduced. As a result, the stereo image capture apparatus 100 reducing the size and cost (smaller system cost) can be implemented. Further, the shorter latency and higher precision of the image processing to be described later can be achieved.

(B) The telephoto region and the wide-angle region can be partitioned using a point where the absolute value of the distortion change amount in the distortion characteristic becomes a maximum value as the boundary of the telephoto region and the wide-angle region (see FIG. 7). Thus, in addition to the effect of (A), it is possible to easily implement a system of highly robust, which is not susceptible to the influence of the external disturbance.

(C) The telephoto region and the wide-angle region can be partitioned using an intersection point where the distortion axis intersects the tangent of the distortion curve where the absolute value of the distortion change amount in the distortion characteristic becomes the maximum value as the boundary of the telephoto region and the wide-angle region (see FIG. 7). As a result, the distortion occurred in the telephoto region and the distortion correction amount can be reduced smaller than (B) (i.e., the distortion correction amount can be set very close to zero).

(D) The telephoto region and the wide-angle region can be partitioned using a point where the absolute value of the distortion change rate in the distortion characteristic becomes a maximum value as the boundary of the telephoto region and the wide-angle region (see FIG. 8). As a result, in addition to the effect of (B) or instead of the effect of (B), it is possible to cope with the distortion curve having a smaller rising rate.

(E) The telephoto region and the wide-angle region can be partitioned using an intersection point where the distortion axis intersects the tangent of the distortion curve where the absolute value of the distortion change rate in the distortion characteristic becomes the maximum value as the boundary of the telephoto region and the wide-angle region (see FIG. 8). As a result, the distortion occurred in the telephoto region and the distortion correction amount can be reduced smaller than (D) (i.e., the distortion correction amount can be set very close to zero).

The specific configuration (configuration design) of the lens 21 (first optical system, second optical system) having the distortion characteristic described above can be changed freely, and various designs can be applied. Although FIG. 3 depicts the lens 21 as a single lens, the lens 21 is typically composed of a plurality of lenses. That is, the lens 21 can be a regarded as a lens appropriately set with parameters of lens (e.g., number of lenses, lens spacing, lens power, curvature radius, existence/non-existence of junction, existence/non-existence of aspherical face), and can be optimized with a given balance of the distortion at the center of the image and the distortion at the periphery of the image.

FIG. 9 is an example of a cross-sectional view of a configuration of the lens 21 (first optical system, second optical system), and FIG. 10 is an aberration diagram of the lens 21 of FIG. 9.

As illustrated in FIG. 9, the lens 21 (first optical system, second optical system) includes, for example, a front group Grf, a diaphragm ST, and a rear group Grr in an order from an object side to an image sensor side. The front group Grf is an optical system including a negative meniscus lens (first lens L1) convex toward the object side, a biconcave negative lens (second lens L2), a positive meniscus lens (third lens L3) convex toward the object side, and a positive meniscus lens (fourth lens L4) convex toward the object side, sequentially from the object side to the image sensor side. The diaphragm ST is an aperture stop. The rear group Grr is an optical system including a biconvex positive lens (fifth lens L5). Each of the second lens L2 to the fifth lens L5 has an aspherical face on both faces, and the second lens L2 to the fifth lens L5 can be made of, for example, resin material, such as plastic.

Further, a light receiving face of the CMOS image sensor 23 is arranged at the image sensor side of the rear group Grr (image sensor side of the fifth lens L5) via a parallel plate FR used as a filter. The parallel plate FR includes, for example, various optical filters and a cover glass of the CMOS image sensor 23.

In FIG. 9, the reference number "ri" (i = 1, 2, 3, ...) attached to each lens face is counted as the i-th lens face when counted from the object side, in which the cemented faces of the lenses is counted as one face, and a specific face marked with "*" for "ri" indicates that the specific face is aspherical. In this case, the diaphragm ST(aperture stop), each side of the parallel plate FR, and the light receiving face of the CMOS image sensor 23 are defined as one face.

Under such configuration, the light beam incident from the object side passes along the optical axis AX in an order from the first lens L1, the second lens L2, the third lens L3, the fourth lens L4, the diaphragm ST, the fifth lens L5, and the parallel plate FR, and then forms an optical image of the object on the light receiving face of the CMOS image sensor 23. Then, in the CMOS image sensor 23, the optical image is converted into electrical signals.

The construction data of each lens in the example configuration of the lens 21 (first optical system, second optical system) is described as below.

Face Data [mm]

| Face number | r | d | nd | vd |
|---|---|---|---|---|
| Object Face | ∞ | ∞ | | |
| 1 | 16.70 | 0.70 | 1.883 | 40.81 |
| 2 | 4.94 | 3.12 | | |
| 3* | -49.95 | 0.80 | 1.53048 | 55.72 |
| 4* | 1.83 | 0.65 | | |
| 5* | 1.76 | 1.36 | 1.847 | 23.82 |
| 6* | 1.56 | 1.14 | | |
| 7* | 2.44 | 1.10 | 1.77601 | 23.99 |
| 8* | 5.96 | 0.32 | | |
| 9 (diaphragm) | ∞ | 0.51 | | |
| 10* | 4.36 | 1.98 | 1.53048 | 55.72 |
| 11* | -1.01 | 1.21 | | |
| 12 | ∞ | 0.50 | 1.51680 | 64.20 |
| 13 | ∞ | 1.24 | | |
| Image Face | ∞ | | | |

Aspherical Face data

| | |
|---|---|
| Third Face | K= -100, A4=0, A6= -3.95E-06, A8= -1.65E-07 |
| Fourth Face | K= -1.0, A4=0, A6= -4.81E-04, A8= -2.74E-05 |
| Fifth Face | K= -0.8, A4=0, A6= -8.35E-06, A8= -4.55E-06 |
| Sixth Face | K= -3.3, A4=0, A6= -1.07E-03, A8= 1.76E-04 |
| Seventh Face | K= -8.5, A4=0, A6= 4.19E-03, A8= 6.86E-04 |
| Eighth Face | K= 31.0, A4=0, A6= 7.14E-02, A8= -3.56E-02 |
| Tenth Face | K= -4.6, A4=0, A6= 4.06E-03, A8= -5.28E-04 |
| Eleventh Face | K= -1.7, A4=0, A6= 9.91E-03, A8= -7.52E-04 |

Various data

| | |
|---|---|
| Focal point Length | 0.839 |
| F Number | 2.762 |
| Half Angle of View | 95.548 |
| Image Height | 2.389 |
| Total lens length | 15.342 |
| BF | 1.665 |

In the above described face data, the face number corresponds to the number "i" of the reference number "ri" (i = 1, 2, 3, ...) applied to each lens face illustrated in FIG. 9. The face attached with "*" for the number "i" indicates an aspheric face such as a refractive face of an aspherical shape or a face having a refractive effect equivalent to the aspherical face.

Further, "r" denotes a radius of curvature (mm) of each face, "d" denotes a spacing (face interval on axis) of each lens face on the optical axis at an infinity in-focus state, "nd" denotes a refractive index for "d" line (wavelength 587.56 nm) of each lens, and "vd" denotes an Abbe number, respectively. Since the faces of the diaphragm ST, the parallel face plate FR, and the light receiving face of the CMOS image sensor 23 are planar, their radius of curvature is infinite (∞).

The above aspherical face data indicates a value of a quadratic face parameter (conical coefficient K) and an aspherical coefficient Ai (i = 4, 6, 8, 10, 12) of a face set as the aspherical face (i.e., face attached with "*" for the number "i" in the face data). The aspherical shape of the optical face is defined by using a local orthogonal coordinate system (x, y, z) setting a face vertex as the origin point, and a direction from an object to the image capture device as the positive direction on the z-axis, which is represented by the following formula.

$$z(h) = ch2/[1+\sqrt{\{1-(1+K)c2h2\}}] + \Sigma Ai\times hi$$

wherein

"z(h)" denotes the displacement in the direction of z-axis at the height "h" with respect to the face vertex used as the reference,
"h" denotes the height in a direction perpendicular to the z-axis (h2 = x2+y2),
"c" denotes the paraxial curvature (= 1/curvature radius),
"Ai" denotes the i-th aspherical coefficient, and
"K" denotes the quadratic face parameter (cone factor).

In the above described aspheric data, "En" means "n power of 10." For example, "E+001" means "+1 power of 10," and "E-003" means "-3 power of 10."

FIG. 10 is an example of an aberration diagram of a configuration of the lens 21 (first optical system, second optical system) of FIG. 9. FIG. 10A shows an example of spherical aberration (sinusoidal condition) (longitudinal spherical aberration), FIG. 10B shows astigmatism aberration (astigmatism fieldcurver), and FIG. 10C shows distortion aberration (distortion).

The horizontal axis of the spherical aberration represents a deviation of the focal point in "mm" unit, and the vertical axis is expressed by a value normalized by the incident height. The horizontal axis of astigmatism aberration represents a deviation of the focal point in "mm" unit, and the vertical axis represents the image height in "mm" unit. The horizontal axis of the distortion aberration is expressed by a ratio (%) of the actual image height with respect to the ideal image height, and the vertical axis represents the angle of view in degrees, and in FIG. 10C, the vertical axis represents up to a half angle of view such as 90 degrees.

In the diagram of astigmatism aberration (FIG. 10B), a dot line DS represents a sagittal line, and a solid line DM represents a tangential shape. The diagram of the spherical aberration (FIG. 10A) shows aberration of three wavelengths such as "d" line (wavelength 587.56 nm) by a long-dashed short-dashed line, "g" line (wavelength 435.84 nm) by a broken line, and "C" line (wavelength 656.28 nm) by a solid line. The diagrams of the astigmatism aberration (FIG. 10B) and distortion aberration (FIG. 10C) indicate results of using the above "d" line (wavelength 587.56 nm).

As illustrated in FIG. 10C, in the configuration of the lens 21 (first optical system, second optical system) of FIG. 9, until the angle of view (image height) becomes a given value (about 45 degrees) from 0, the distortion aberration (distortion) is being substantially zero, and when a value exceeds the given value (about 45 degrees), the distortion aberration increases abruptly. By applying such design principle, the lens 21 (first optical system, second optical system) having this distortion characteristic can be implemented.

FIG. 11 is an example of a functional block diagram of the stereo image capture apparatus 100. As illustrated in FIG. 11, the stereo image capture apparatus 100 includes, for example, an image processing unit 30 to which image data of the left-side camera C0 (first camera) and the right-side camera C1 (second camera) are input. The image processing unit 30 is connected to a correction parameter storage unit 40 and a disparity calculation unit 50. The correction parameter storage unit 40, implemented by a non-volatile memory, stores correction parameters for correcting the image data (the captured image data including the telephoto region set with lower distortion and the wide-angle region set with higher distortion) captured by the left-side camera C0 (first camera) and the right-side camera C1 (second camera). The disparity calculation unit 50 can be implemented as a functional unit included in the image processing unit 30. Further, the image processing unit 30, the correction parameter storage unit 40, and the disparity calculation unit 50 can be implemented as one or more functional units of the digital signal processing unit 28 illustrated in FIG. 3.

The image processing unit 30 refers to the correction parameters stored in the correction parameter storage unit 40 to perform the image processing to the telephoto region and the wide-angle region with respect to the image data captured through the lens 21 (first optical system, second optical system) included in the left-side camera C0 (first camera) and the right-side camera C1 (second cameras). More specifically, the image processing unit 30 performs the distortion correction on each image data captured through the lens 21 (first optical system, second optical system) included in the left-side camera C0 (first camera) and the right-side camera C1 (second camera), and sets the distortion correction amount in the telephoto region relatively smaller and the distortion correction amount in the wide-angle region, relatively larger.

As described above, the lens 21 (first optical system, second optical system) included in the left-side camera C0 (first camera) and the right-side camera C1 (second camera) has a specific distortion characteristic, in which the distortion in the telephoto region can be reduced to substantially zero (relatively smaller) and the distortion rapidly increases from the point when entering into the wide-angle region (relatively larger). The correction parameters optimized in accordance with the distortion characteristic are stored in the correction parameter storage unit 40.

The image processing unit 30 performs a geometric correction, in which the distortion correction amount in the telephoto region can be reduced to substantially zero while the distortion correction amount in the wide-angle region can be gradually increased to compensate the above described rapid increase of the distortion. As a result, the processed image data (correction processed data) of the telephoto region and the processed image data (correction processed data) of the wide-angle region can be generated. By performing the image processing (correction processing) that is optimized for each of the telephoto region and the wide-angle region, the field of view in the wide-angle region can be secured, the higher detection accuracy at the far side in the telephoto region can be secured, and the size-reduction and cost reduction of the stereo image capture apparatus 100 can be achieved.

After the image processing unit 30 performs the image processing (correction processing) on the image data, the disparity calculation unit 50 performs a disparity calculation operation on the image data received from the image processing unit 30 and outputs a disparity image. More specifically, the disparity calculation unit 50 calculates a telephoto region disparity image corresponding to a disparity of a telephoto region image captured by the left-side camera C0 and a telephoto region image captured by the right-side camera C1, and calculates a wide-angle region disparity image corresponding to a disparity of a wide-angle region image captured by the left-side camera C0 and a wide-angle region image captured by the right-side camera C1. Further, the disparity calculation unit 50 synthesizes the telephoto region disparity image and the wide-angle region disparity image to output an integrated disparity image.

In addition to the image processing (correction processing) described above, the image processing unit 30 can perform another correction processing, such as restoring the lowered modulation transfer function (MTF) characteristic, correcting the shading (peripheral light quantity correction), and reducing noise, to output a luminance image that has improved image quality. By correcting the images captured by the left-side camera C0 (first camera) and the right-side camera C1 (second camera) which have matched the baseline direction and the horizontal direction substantially, the disparity in the horizontal direction can be calculated, and then an accurate disparity image can be output.

The above described processing by the image processing unit 30, the correction parameter storage unit 40, and the disparity calculation unit 50 can be referred to as, for example, a stereo matching process.

FIG. 12 is a schematic diagram illustrating an example of a flow of an image processing performed by the stereo image capture apparatus 100.

The image conversion is performed for each of the telephoto region and the wide-angle region for each of the image data (luminance image) captured by the left-side camera C0 and the right-side camera C1 (in a case of the wide-angle region, the entire image region including the telephoto region is processed). The telephoto region image can be generated as a region image of 1.2 mm × 0.9 mm (horizontal × vertical) set with a characteristic of the central projection and an image height of 1.5 mm as the diagonal. Further, by setting the same resolution for the telephoto region image and the wide-angle region image (e.g., 640 pixels × 480 pixels), the stereo image capture apparatus 100 can be implemented using a simpler system configuration. Further, although the correction amount increases in the wide-angle region image, the required correction amount can be halved by reducing the resolution to half. Further, the resolution of the telephoto region image can be adjusted to two times so that the resolution of the telephoto region image and the resolution of the wide-angle region image can be matched to use the image quality of the wide-angle region image effectively. Further, although the system configuration becomes complex, the telephoto region image (640 pixels × 480 pixels) and the wide-angle region image (1280 pixels × 960 pixels) can be generated using a set given resolution (not changing the resolution of the telephoto region image and the wide-angle region image).

As above described, the telephoto region disparity image corresponding to a disparity of a pair of the telephoto region image captured by the left-side camera C0 and the telephoto region image captured by the right-side camera C1 can be generated, and the wide-angle region disparity image corresponding to a disparity of a pair of the wide-angle region images captured by the right-side camera C1 and the wide-angle region image captured by the left-side camera C0 can be generated. By synthesizing the telephoto region disparity image and the wide-angle region disparity image, an integrated disparity image can be generated.

As to the above described apparatus, the stereo image capture apparatus that can secure a field of view in the wide-angle region, secure the higher detection accuracy at a far side in the telephoto region, and implement a size-reduction and a cost reduction can be provided.

Numerous additional modifications and variations are possible in light of the above teachings. It is therefore to be understood that, within the scope of the appended claims, the disclosure of this patent specification may be practiced otherwise than as specifically described herein. Any one of the above-described operations may be performed in various other ways, for example, in an order different from the one described above.

As described above, the present invention can be implemented in any convenient form, for example using dedicated hardware, or a mixture of dedicated hardware and software. The present invention may be implemented as computer software implemented by one or more networked processing apparatuses. The processing apparatuses can compromise any suitably programmed apparatuses such as a general-purpose computer, personal digital assistant, mobile telephone (such as a WAP or 3G-compliant phone) and so on. Since the present invention can be implemented as software, each and every aspect of the present invention thus encompasses computer software implementable on a programmable device. The computer software can be provided to the programmable device using any conventional carrier medium (carrier means). The carrier medium can compromise a transient carrier medium such as an electrical, optical, microwave, acoustic or radio frequency signal carrying the computer code. An example of such a transient medium is a TCP/IP signal carrying computer code over an IP network, such as the Internet. The carrier medium can also comprise a storage medium for storing processor readable code such as a floppy disk, hard disk, CD ROM, magnetic tape device or solid state memory device.

## Claims

**1.** A stereo image capture apparatus (100) comprising:

a first image capture device (23-0);
a second image capture device (23-1);
a first optical system (21-0) configured to divide image data to be captured by the first image capture device (23-0) into a telephoto region and a wide-angle region;
a second optical system (21-1) configured to divide image data to be captured by the second image capture device (23-1) into a telephoto region and a wide-angle region; and
a processor (28, 30) configured to perform image processing on the image data captured by the first image capture device (23) and the image data captured by the second image capture device (23) according to the telephoto region and the wide-angle region;
**characterised in that**:
the first optical system (21-0) and the second optical system (21-1) are each set with distortion characteristic satisfying formulas (X) and (Y) in the telephoto region,

$$(xD/100)/s < 10 \quad (X)$$

$$(yD/100)/s < 10 \quad (Y)$$

wherein

x denotes an image height in the x axis, at a boundary between the telephoto region and the wide-angle region, in millimeter (mm),
y denotes an image height in the y axis, at a boundary between the telephoto region and the wide-angle region, in millimeter (mm),
D denotes the absolute value of distortion, in percent (%), and s denotes a sensor pitch, in millimeter (mm), of the first image capture device (23) and the second image capture device (23).

**2.** The stereo image capture apparatus (100) according to claim 1,
wherein the first optical system (21-0) and the second optical system (21-1) project a central projection image in the telephoto region.

**3.** The stereo image capture apparatus (100) according to claim 1 or claim 2,
wherein the processor (28, 30) performs distortion correction on the image data captured by the first image capture device (23-0) and the image data captured by the second image capture device (23-1) by setting a distortion correction amount applied to the telephoto region smaller than a distortion correction amount applied to the wide-angle region.

**4.** The stereo image capture apparatus (100) according to any one of claims 1 to 3,

wherein a distortion occurred in the wide-angle region of the first optical system (21-0) is larger than a distortion occurred in the telephoto region of the first optical system (21-0),
wherein a distortion occurred in the wide-angle region of the second optical system (21-1) is larger than a distortion occurred in the telephoto region the second optical system (21-1).

**5.** The stereo image capture apparatus (100) according to any one of claims 1 to 4,

wherein the telephoto region and the wide-angle region in the first optical system (21-0) are partitioned from each other based on a specific angle of view at which a change of distortion amount in the first optical system caused by a change of angle of view becomes a maximum,
wherein the telephoto region and the wide-angle region in the second optical system (21-1) are partitioned from each other based on a specific angle of view at which a change of distortion amount in the second optical system (21-1) caused by a change of angle of view becomes a maximum.

**6.** The stereo image capture apparatus (100) according to any one of claims 1 to 3,
wherein the telephoto region and the wide-angle region are partitioned from each other at a point corresponding to 1% of distortion set as the distortion characteristic as a boundary of the telephoto region and the wide-angle region.

**7.** The stereo image capture apparatus (100) according to any one of claims 1 to 3,
wherein the telephoto region and the wide-angle region are partitioned from each other using a point where the absolute value of distortion change amount in the distortion characteristic becomes a maximum value as a boundary of the telephoto region and the wide-angle region.

**8.** The stereo image capture apparatus (100) according to any one of claims 1 to 3,
wherein the telephoto region and the wide-angle region are partitioned from each other using an intersection point of a distortion axis and a tangent of a distortion curve where the absolute value of distortion change amount in the distortion characteristic becomes a maximum value as a boundary of the telephoto region and the wide-angle region.

**9.** The stereo image capture apparatus (100) according to any one of claims 1 to 3,
wherein the telephoto region and the wide-angle region are partitioned from each other using a point where the absolute value of distortion change rate in the distortion characteristic becomes a maximum value as a boundary of the telephoto region and the wide-angle region.

**10.** The stereo image capture apparatus (100) according to any one of claims 1 to 3,
wherein the telephoto region and the wide-angle region are partitioned from each other using an intersection point of a distortion axis and a tangent of the distortion curve where the absolute value of distortion change rate in the distortion characteristic becomes a maximum value as a boundary of the telephoto region and the wide-angle region.

**11.** The stereo image capture apparatus (100) according to any one of claims 1 to 10, wherein each of the first optical system (21-0) and the second optical system (21) projects an equidistant projection image in the wide-angle region.

**12.** The stereo image capture apparatus (100) according to any one of claims 1 to 10, wherein each of the first optical system (21-0) and the second optical system (21) projects an orthographic projection image in the wide-angle region.

**13.** The stereo image capture apparatus (100) according to any one of claims 1 to 12,
wherein the image data captured by the first image capture device (23-0) and the image data captured by the second image capture device (23-1) and processed by the processor (28, 30) are set with the same resolution in the telephoto region and the wide-angle region.

## Patentansprüche

**1.** Stereobildaufnahmeeinrichtung (100), umfassend:

eine erste Bildaufnahmevorrichtung (23-0);
eine zweite Bildaufnahmevorrichtung (23-1);
ein erstes optisches System (21-0), das dazu konfiguriert ist, die von der ersten Bildaufnahmevorrichtung (23-0) aufzunehmenden Bilddaten in einen Telebereich und einen Weitwinkelbereich zu unterteilen;
ein zweites optisches System (21-1), das dazu konfiguriert ist, die durch die zweite Bildaufnahmevorrichtung (23-1) aufzunehmenden Bilddaten in einen Telebereich und einen Weitwinkelbereich zu unterteilen; und
einen Prozessor (28, 30), der dazu konfiguriert ist, eine Bildverarbeitung an den von der ersten Bildaufnahmevorrichtung (23) aufgenommenen Bilddaten und den von der zweiten Bildaufnahmevorrichtung (23) aufgenommenen Bilddaten gemäß dem Telebereich und dem Weitwinkelbereich durchzuführen;
**dadurch gekennzeichnet, dass**:
das erste optische System (21-0) und das zweite optische System (21-1) jeweils mit verzerrungseigenschafterfüllenden Formeln (X) und (Y) in dem Telebereich eingestellt sind,

$$(xD/100)/s < 10 \qquad (X)$$

$$(yD/100)/s < 10 \qquad (Y)$$

wobei

x eine Bildhöhe in der x-Achse an einer Grenze zwischen dem Telebereich und dem Weitwinkelbereich in Millimetern (mm) anzeigt,
y eine Bildhöhe in der y-Achse an einer Grenze zwischen dem Telebereich und dem Weitwinkelbereich in Millimetern (mm) anzeigt,
D den Absolutwert von Verzerrung in Prozent (%) anzeigt und s eine Sensorneigung in Millimetern (mm) der ersten Bildaufnahmevorrichtung (23) und der zweiten Bildaufnahmevorrichtung (23) anzeigt.

**2.** Stereobildaufnahmeeinrichtung (100) nach Anspruch 1, wobei das erste optische System (21-0) und das zweite optische System (21-1) ein zentrales Projektionsbild in dem Telebereich projizieren.

**3.** Stereobildaufnahmeeinrichtung (100) nach Anspruch 1 oder 2,
wobei der Prozessor (28, 30) eine Verzerrungskorrektur an den von der ersten Bildaufnahmevorrichtung (23-0) aufgenommenen Bilddaten und den von der zweiten Bildaufnahmevorrichtung (23-1) aufgenommenen Bilddaten durchführt, indem er einen auf den Telebereich angewendeten Verzerrungskorrekturbetrag kleiner einstellt als einen auf den Weitwinkelbereich angewendeten Verzerrungskorrekturbetrag.

**4.** Stereobildaufnahmeeinrichtung (100) nach einem der Ansprüche 1 bis 3,

wobei eine in dem Weitwinkelbereich des ersten optischen Systems (21-0) aufgetretene Verzerrung größer ist als eine in dem Telebereich des ersten optischen Systems (21-0) aufgetretene Verzerrung,
wobei eine in dem Weitwinkelbereich des zweiten optischen Systems (21-1) aufgetretene Verzerrung größer ist als eine in dem Telebereich des zweiten optischen Systems (21-1) aufgetretene Verzerrung.

**5.** Stereobildaufnahmeeinrichtung (100) nach einem der Ansprüche 1 bis 4,

wobei der Telebereich und der Weitwinkelbereich in dem ersten optischen System (21-0) auf Grundlage eines bestimmten Blickwinkels voneinander getrennt sind, bei dem eine durch eine Änderung des Blickwinkels verursachte Änderung des Verzerrungsbetrags in dem ersten optischen System ein Maximum erreicht,
wobei der Telebereich und der Weitwinkelbereich in dem zweiten optischen System (21-1) auf Grundlage eines bestimmten Blickwinkels voneinander getrennt sind, bei dem eine durch eine Änderung des Blickwinkels verursachte Änderung des Verzerrungsbetrags in dem zweiten optischen System (21-1) ein Maximum erreicht.

**6.** Stereobildaufnahmeeinrichtung (100) nach einem der Ansprüche 1 bis 3,
wobei der Telebereich und der Weitwinkelbereich an einem Punkt, der 1 % der als die Verzerrungseigenschaft eingestellten Verzerrung entspricht, als eine Grenze des Telebereichs und des Weiwinkelbereichs voneinander getrennt sind.

7. Stereobildaufnahmeeinrichtung (100) nach einem der Ansprüche 1 bis 3, wobei der Telebereich und der Weitwinkelbereich unter Verwendung eines Punktes, an dem der Absolutwert des Verzerrungsänderungsbetrags in der Verzerrungseigenschaft ein Maximum erreicht, als eine Grenze des Telebereichs und des Weitwinkelbereichs voneinander getrennt werden.

8. Stereobildaufnahmeeinrichtung (100) nach einem der Ansprüche 1 bis 3, wobei der Telebereich und der Weitwinkelbereich unter Verwendung eines Schnittpunkts einer Verzerrungsachse und einer Tangente einer Verzerrungskurve als eine Grenze des Telebereichs und des Weitwinkelbereichs voneinander getrennt werden, wobei der Absolutwert des Verzerrungsänderungsbetrags in der Verzerrungseigenschaft ein Maximum erreicht.

9. Stereobildaufnahmeeinrichtung (100) nach einem der Ansprüche 1 bis 3, wobei der Telebereich und der Weitwinkelbereich unter Verwendung eines Punktes, an dem der Absolutwert der Verzerrungsänderungsrate in der Verzerrungseigenschaft ein Maximum erreicht, als eine Grenze des Telebereichs und des Weitwinkelbereichs voneinander getrennt werden.

10. Stereobildaufnahmeeinrichtung (100) nach einem der Ansprüche 1 bis 3, wobei der Telebereich und der Weitwinkelbereich unter Verwendung eines Schnittpunkts einer Verzerrungsachse und einer Tangente der Verzerrungskurve, an dem der Absolutwert der Verzerrungsänderungsrate in der Verzerrungseigenschaft ein Maximum erreicht, als eine Grenze des Telebereichs und des Weitwinkelbereichs voneinander getrennt werden.

11. Stereobildaufnahmeeinrichtung (100) nach einem der Ansprüche 1 bis 10, wobei sowohl das erste optische System (21-0) als auch das zweite optische System (21) ein äquidistantes Projektionsbild in dem Weitwinkelbereich projiziert.

12. Stereobildaufnahmeeinrichtung (100) nach einem der Ansprüche 1 bis 10, wobei sowohl das erste optische System (21-0) als auch das zweite optische System (21) ein orthographisches Projektionsbild in dem Weitwinkelbereich projiziert.

13. Stereobildaufnahmeeinrichtung (100) nach einem der Ansprüche 1 bis 12, wobei die von der ersten Bildaufnahmevorrichtung (23-0) aufgenommenen Bilddaten und die von der zweiten Bildaufnahmevorrichtung (23-1) aufgenommenen und von dem Prozessor (28, 30) verarbeiteten Bilddaten in dem Telebereich und in dem Weitwinkelbereich mit der gleichen Auflösung eingestellt werden.

**Revendications**

1. Appareil de capture d'image stéréo (100) comprenant :

   un premier dispositif de capture d'image (23-0) ;
   un deuxième dispositif de capture d'image (23-1) ;
   un premier système optique (21-0) configuré pour diviser des données d'image à capturer par le premier dispositif de capture d'image (23-0) en une région de téléphoto et une région de grand angle ;
   un deuxième système optique (21-1) configuré pour diviser des données d'image à capturer par le deuxième dispositif de capture d'image (23-1) en une région de téléphoto et une région de grand angle ; et
   un processeur (28, 30) configuré pour réaliser un traitement d'image sur les données d'image capturées par le premier dispositif de capture d'image (23) et les données d'image capturées par le deuxième dispositif de capture d'image (23) selon la région de téléphoto et la région de grand angle ;
   **caractérisé en ce que** :
   le premier système optique (21-0) et le deuxième système optique (21-1) sont chacun réglés avec une caractéristique de distorsion satisfaisant les formules (X) et (Y) dans la région de téléphoto,

$$(xD/100)/s < 10 \qquad (X)$$

$$(yD/100)/s < 10 \qquad (Y)$$

où

x désigne une hauteur d'image dans l'axe x, au niveau d'une limite entre la région de téléphoto et la région de grand angle, en millimètres (mm),
y désigne une hauteur d'image dans l'axe y, au niveau d'une limite entre la région de téléphoto et la région de grand angle, en millimètres (mm),
D désigne la valeur absolue de distorsion, en pour cent (%), et
s désigne un pas de capteur, en millimètres (mm), du premier dispositif de capture d'image (23) et du deuxième dispositif de capture d'image (23).

**2.** Appareil de capture d'image stéréo (100) selon la revendication 1,
dans lequel le premier système optique (21-0) et le deuxième système optique (21-1) projettent une image de projection centrale dans la région de téléphoto.

**3.** Appareil de capture d'image stéréo (100) selon la revendication 1 ou la revendication 2,
dans lequel le processeur (28, 30) réalise une correction de distorsion sur les données d'image capturées par le premier dispositif de capture d'image (23-0) et les données d'image capturées par le deuxième dispositif de capture d'image (23-1) par réglage d'une quantité de correction de distorsion appliquée à la région de téléphoto plus petite qu'une quantité de correction de distorsion appliquée à la région de grand angle.

**4.** Appareil de capture d'image stéréo (100) selon l'une quelconque des revendications 1 à 3,

dans lequel une distorsion survenue dans la région de grand angle du premier système optique (21-0) est plus grande qu'une distorsion survenue dans la région de téléphoto du premier système optique (21-0),
dans lequel une distorsion survenue dans la région de grand angle du deuxième système optique (21-1) est plus grande qu'une distorsion survenue dans la région de téléphoto du deuxième système optique (21-1).

**5.** Appareil de capture d'image stéréo (100) selon l'une quelconque des revendications 1 à 4,

dans lequel la région de téléphoto et la région de grand angle dans le premier système optique (21-0) sont séparées l'une de l'autre sur la base d'un angle de vue spécifique auquel un changement de quantité de distorsion dans le premier système optique provoqué par un changement d'angle de vue devient maximal,
dans lequel la région de téléphoto et la région de grand angle dans le deuxième système optique (21-1) sont séparées l'une de l'autre sur la base d'un angle de vue spécifique auquel un changement de quantité de distorsion dans le deuxième système optique (21-1) provoqué par un changement d'angle de vue devient maximal.

**6.** Appareil de capture d'image stéréo (100) selon l'une quelconque des revendications 1 à 3,
dans lequel la région de téléphoto et la région de grand angle sont séparées l'une de l'autre en un point correspondant à 1 % de distorsion réglée en tant que caractéristique de distorsion en tant que limite de la région de téléphoto et de la région de grand angle.

**7.** Appareil de capture d'image stéréo (100) selon l'une quelconque des revendications 1 à 3,
dans lequel la région de téléphoto et la région de grand angle sont séparées l'une de l'autre à l'aide d'un point où la valeur absolue de quantité de changement de distorsion dans la caractéristique de distorsion devient une valeur maximale en tant que limite de la région de téléphoto et de la région de grand angle.

**8.** Appareil de capture d'image stéréo (100) selon l'une quelconque des revendications 1 à 3,
dans lequel la région de téléphoto et la région de grand angle sont séparées l'une de l'autre à l'aide d'un point d'intersection d'un axe de distorsion et d'une tangente d'une courbe de distorsion où la valeur absolue de quantité de changement de distorsion dans la caractéristique de distorsion devient une valeur maximale en tant que limite de la région de téléphoto et de la région de grand angle.

**9.** Appareil de capture d'image stéréo (100) selon l'une quelconque des revendications 1 à 3,
dans lequel la région de téléphoto et la région de grand angle sont séparées l'une de l'autre à l'aide d'un point où la valeur absolue d'un taux de changement de distorsion dans la caractéristique de distorsion devient une valeur maximale en tant que limite de la région de téléphoto et de la région de grand angle.

**10.** Appareil de capture d'image stéréo (100) selon l'une quelconque des revendications 1 à 3,
dans lequel la région de téléphoto et la région de grand angle sont séparées l'une de l'autre à l'aide d'un point d'intersection d'un axe de distorsion et d'une tangente de la courbe de distorsion où la valeur absolue d'un taux de changement de distorsion dans la caractéristique de distorsion devient une valeur maximale en tant que limite de la région de téléphoto et de la région de grand angle.

**11.** Appareil de capture d'image stéréo (100) selon l'une quelconque des revendications 1 à 10, dans lequel chacun du premier système optique (21-0) et du deuxième système optique (21) projette une image de projection équidistante dans la région de grand angle.

**12.** Appareil de capture d'image stéréo (100) selon l'une quelconque des revendications 1 à 10, dans lequel chacun du premier système optique (21-0) et du deuxième système optique (21) projette une image de projection orthographique dans la région de grand angle.

**13.** Appareil de capture d'image stéréo (100) selon l'une quelconque des revendications 1 à 12,
dans lequel les données d'image capturées par le premier dispositif de capture d'image (23-0) et les données d'image capturées par le deuxième dispositif de capture d'image (23-1) et traitées par le processeur (28, 30) sont réglées avec la même résolution dans la région de téléphoto et la région de grand angle.

FIG. 1

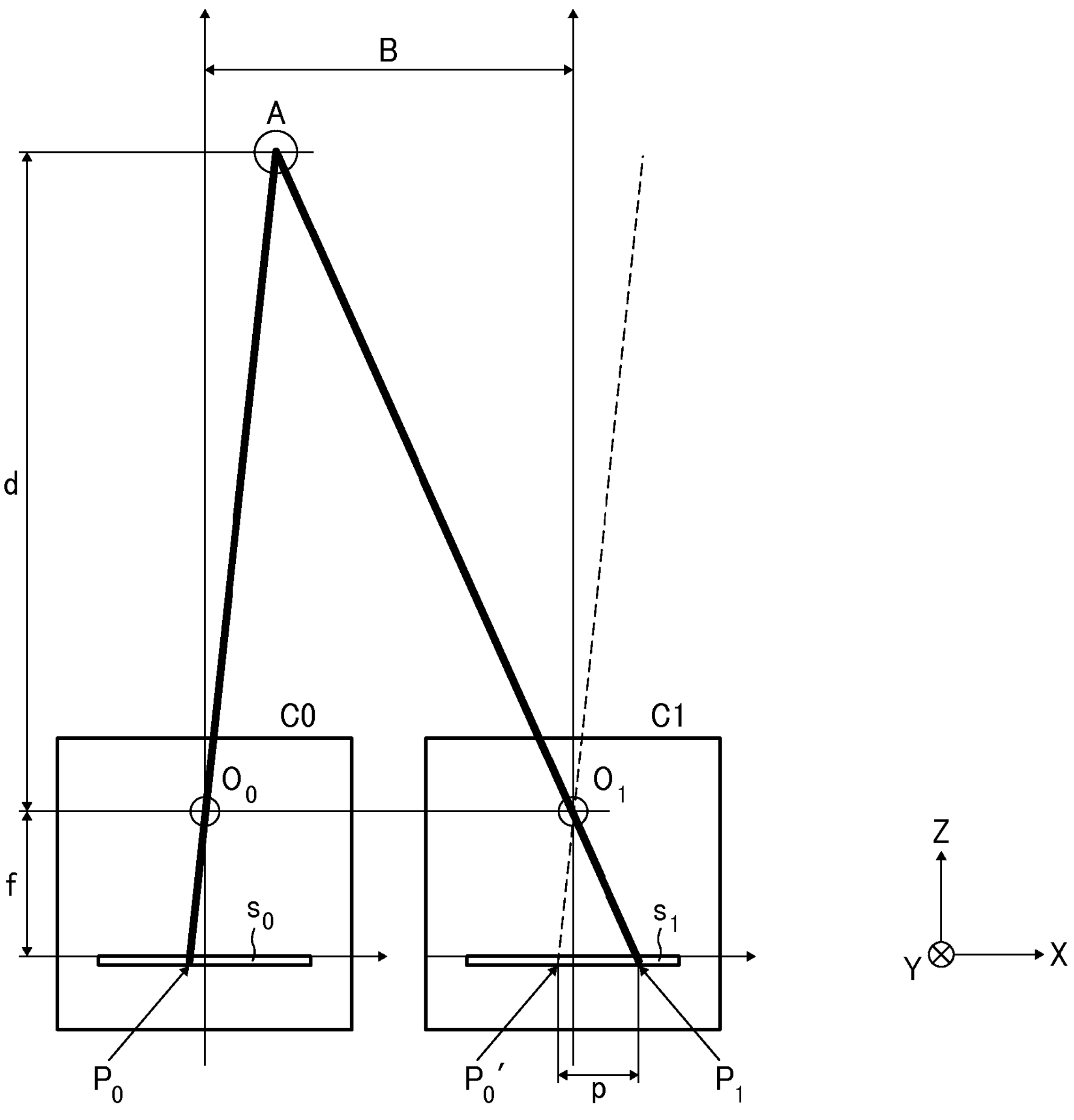

FIG. 2A

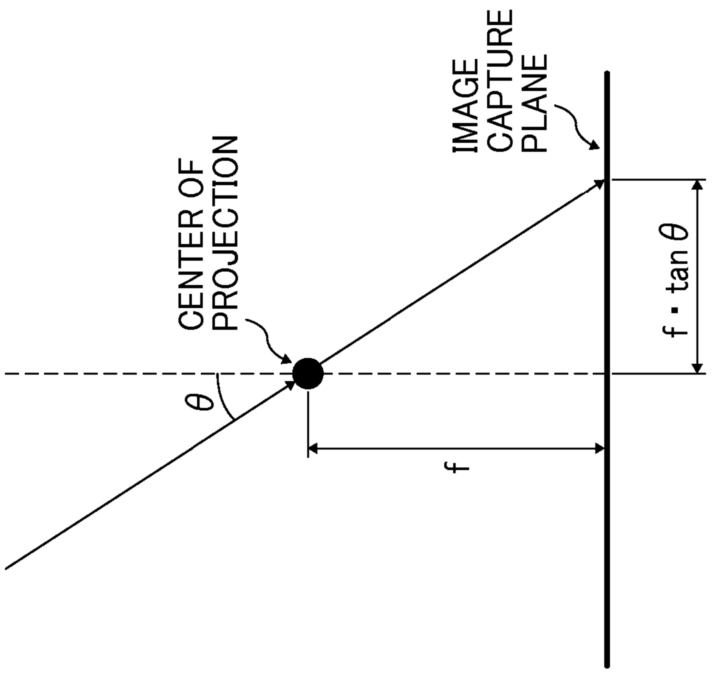


CENTRAL PROJECTION

FIG. 2B

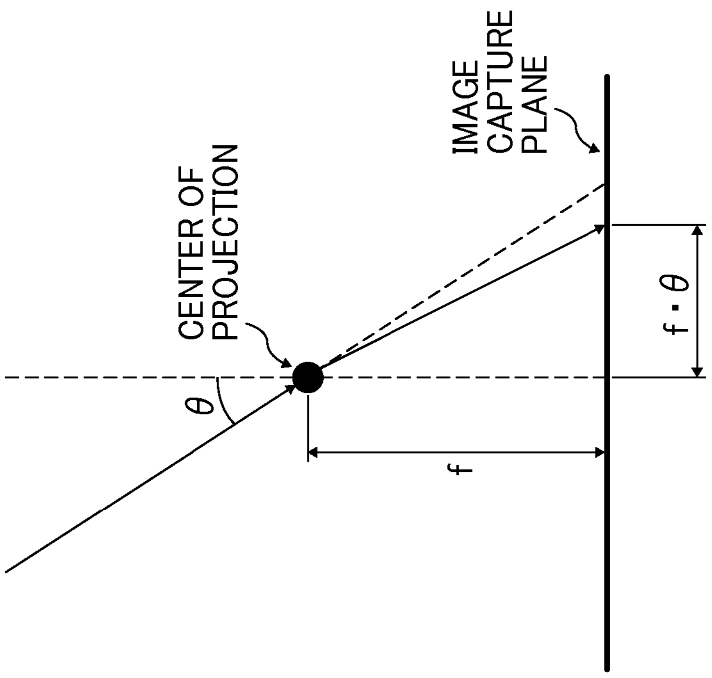


EQUIDISTANCE PROJECTION

FIG. 3

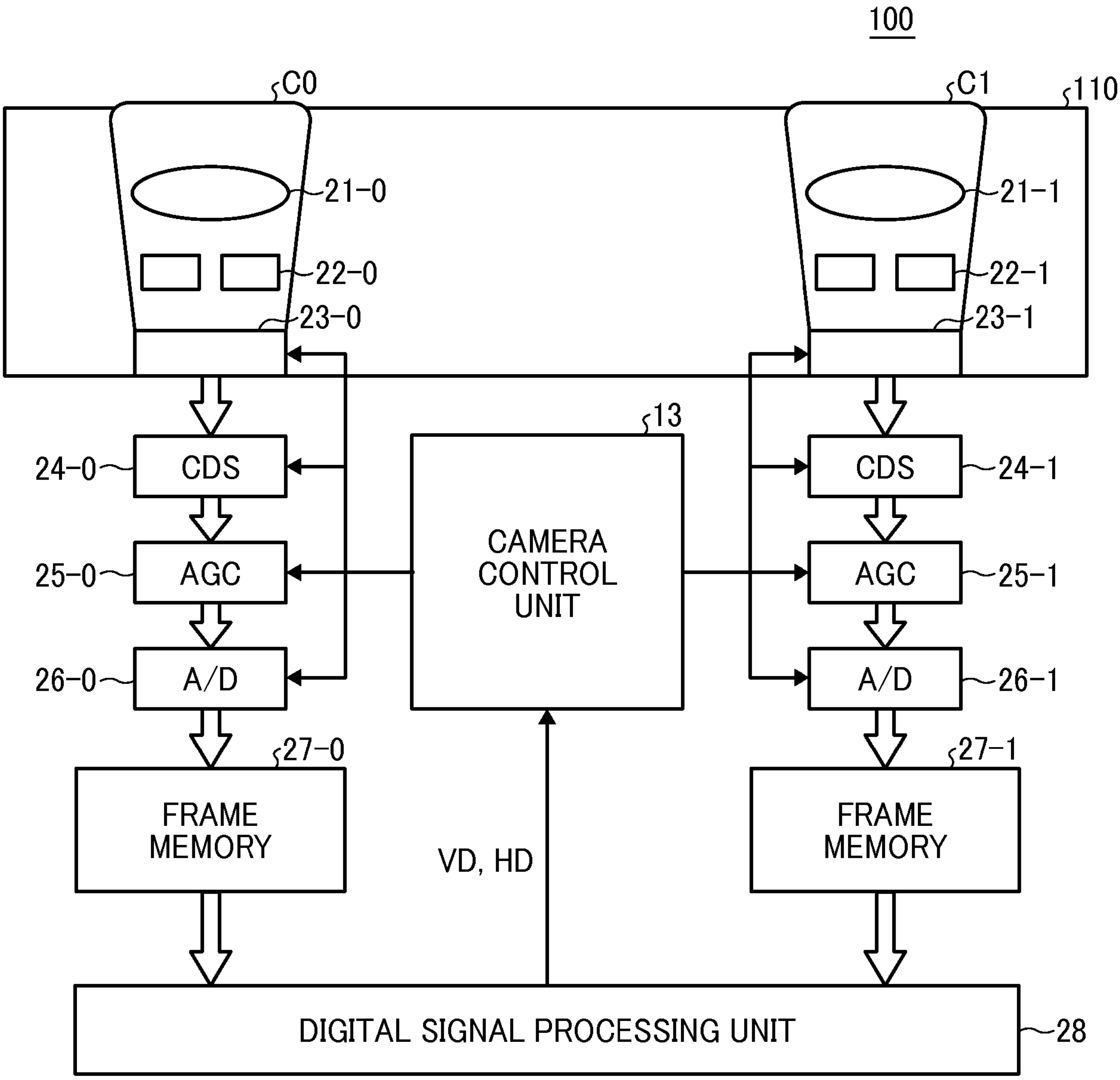
100
C0
C1
110
21-0
21-1
22-0
22-1
23-0
23-1
13
24-0
CDS
CDS
24-1
25-0
AGC
CAMERA
CONTROL
UNIT
AGC
25-1
26-0
A/D
A/D
26-1
27-0
27-1
FRAME
MEMORY
VD, HD
FRAME
MEMORY
DIGITAL SIGNAL PROCESSING UNIT
28

FIG. 4

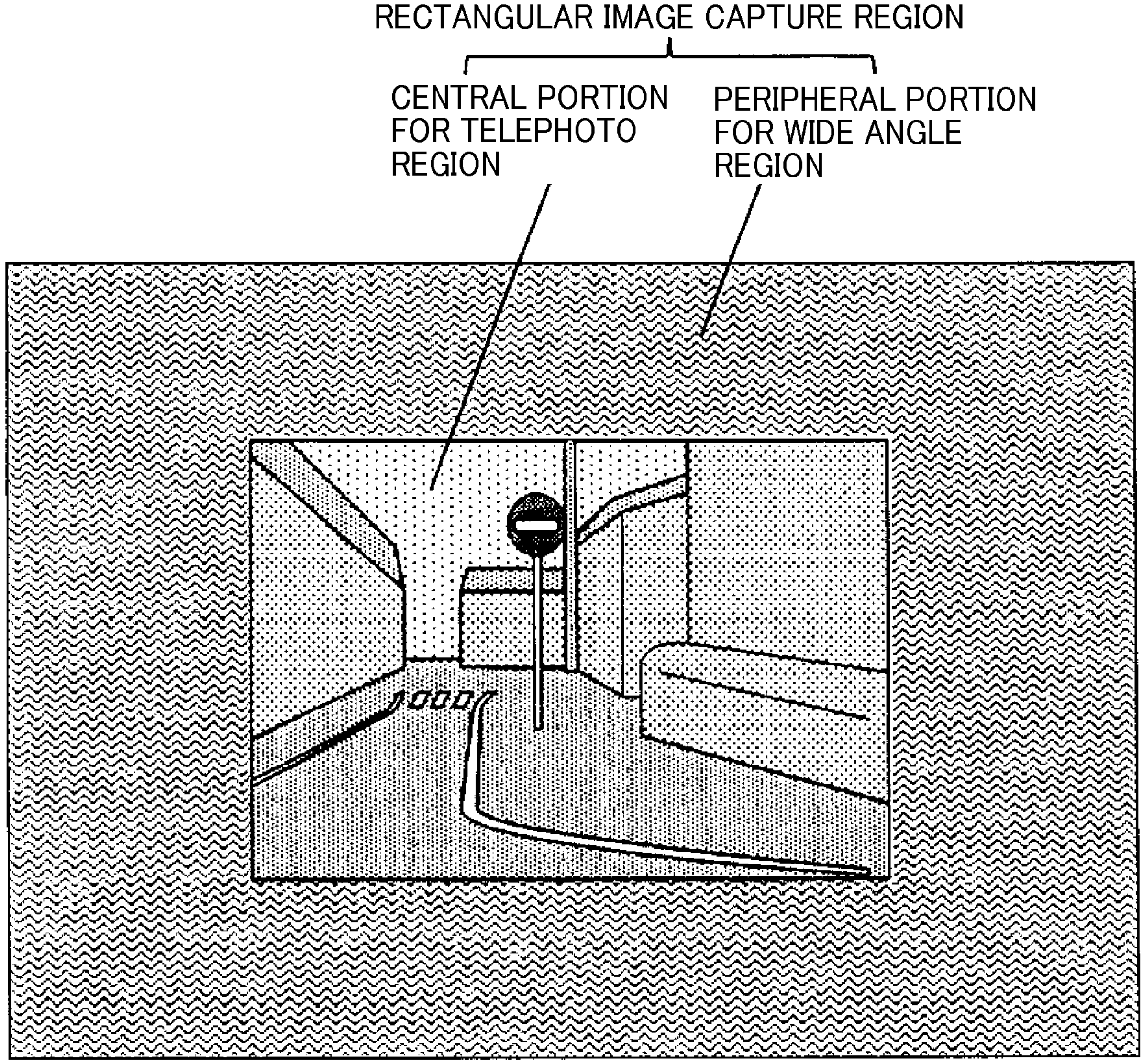
RECTANGULAR IMAGE CAPTURE REGION
CENTRAL PORTION FOR TELEPHOTO REGION
PERIPHERAL PORTION FOR WIDE ANGLE REGION

FIG. 5

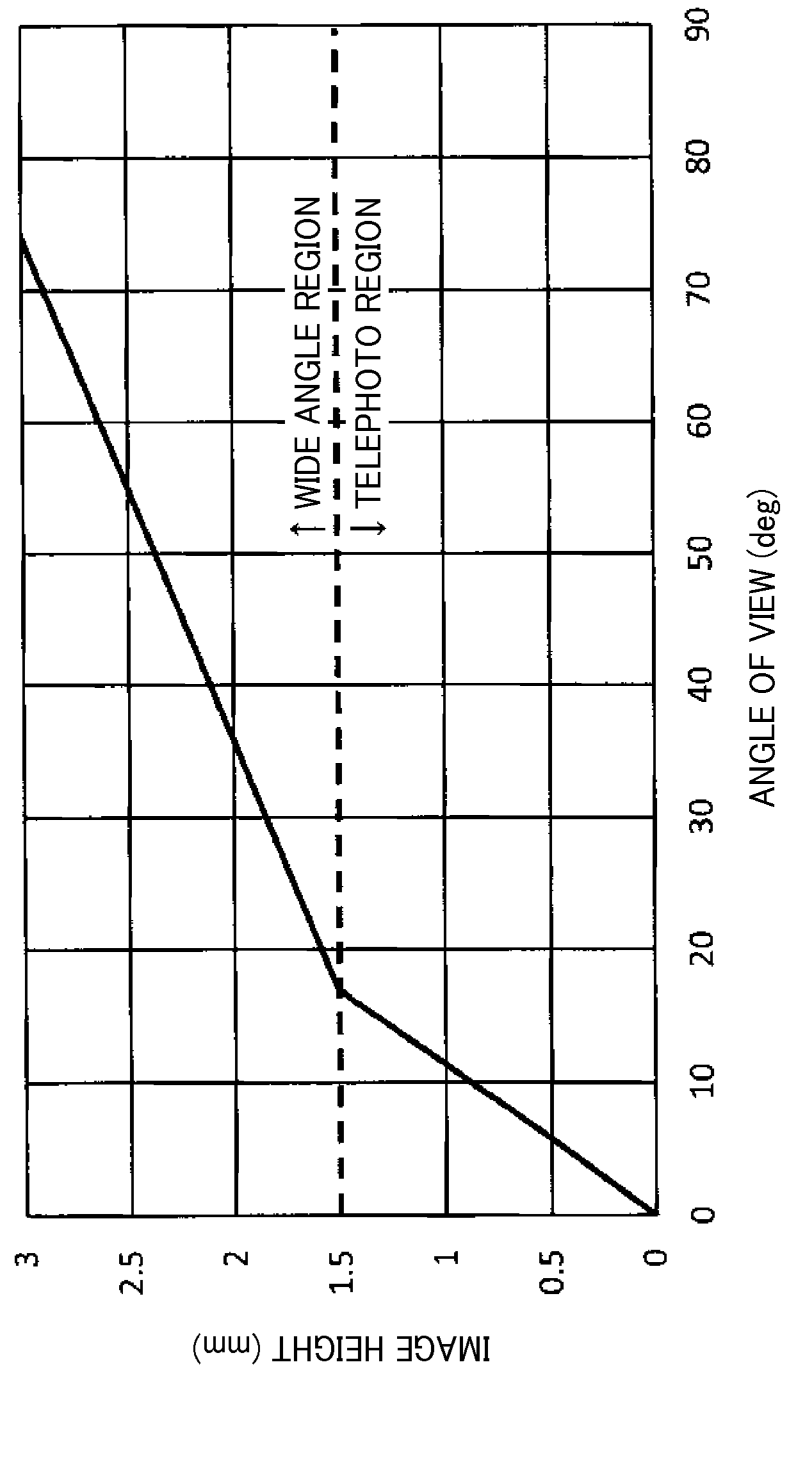

IMAGE HEIGHT (mm)
0
0.5
1
1.5
2
2.5
3
ANGLE OF VIEW (deg)
0
10
20
30
40
50
60
70
80
90
↑ WIDE ANGLE REGION
↓ TELEPHOTO REGION

FIG. 6

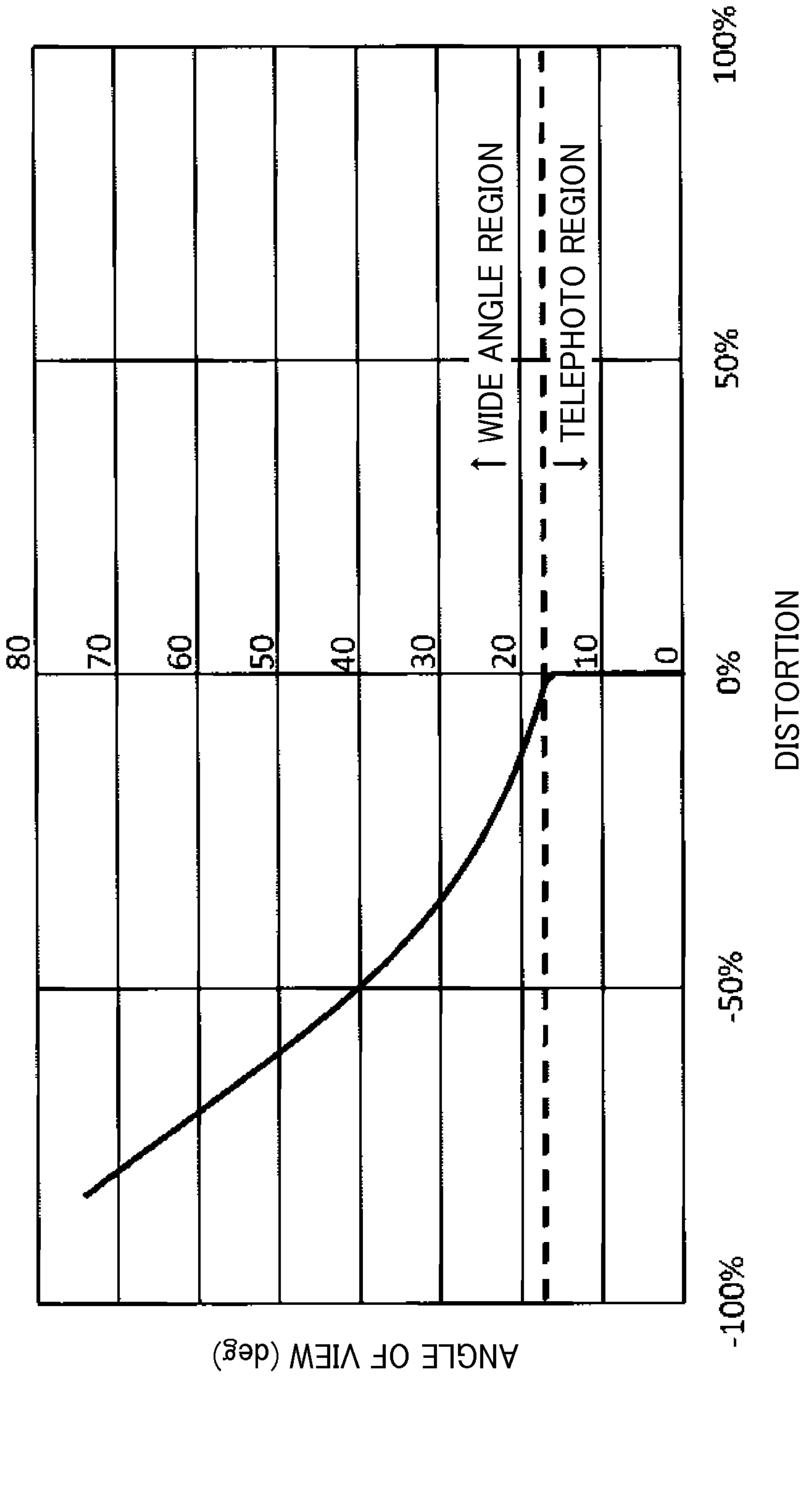
ANGLE OF VIEW (deg)
80
70
60
50
40
30
20
10
0
WIDE ANGLE REGION
TELEPHOTO REGION
-100%
-50%
0%
50%
100%
DISTORTION

FIG. 7

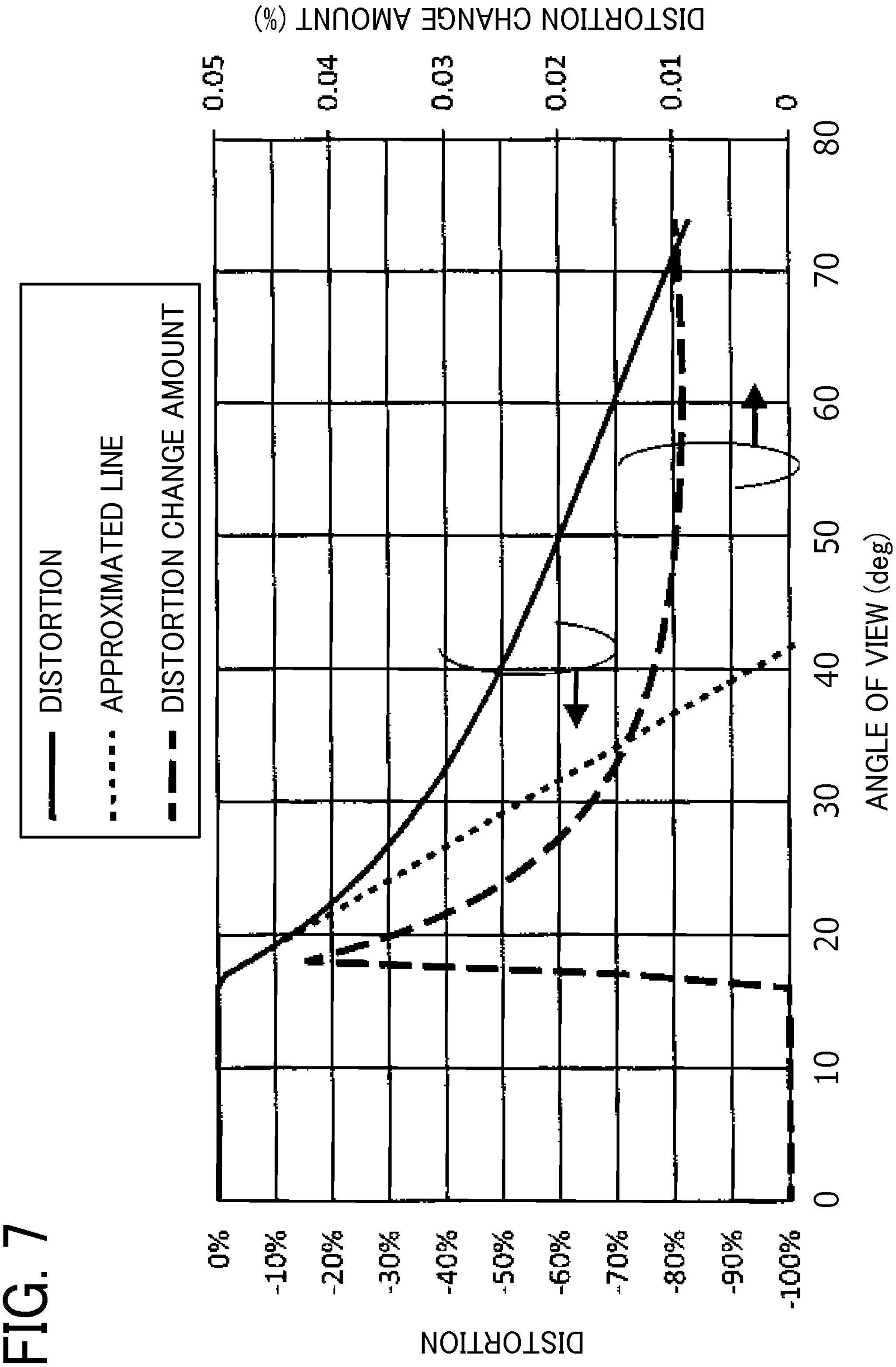
DISTORTION
APPROXIMATED LINE
DISTORTION CHANGE AMOUNT
DISTORTION CHANGE AMOUNT (%)
0.05
0.04
0.03
0.02
0.01
0
DISTORTION
0%
-10%
-20%
-30%
-40%
-50%
-60%
-70%
-80%
-90%
-100%
ANGLE OF VIEW (deg)
0
10
20
30
40
50
60
70
80

FIG. 8

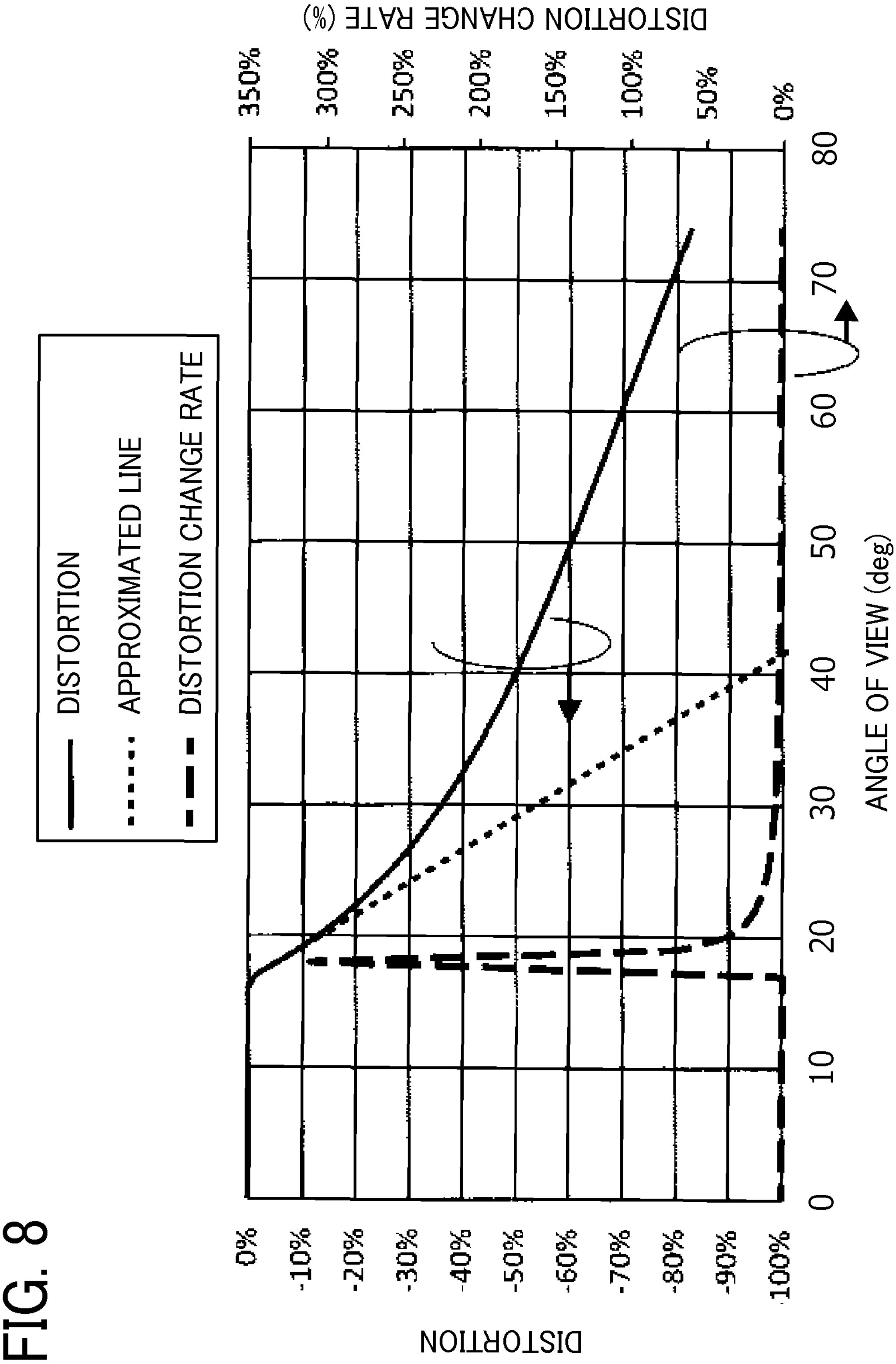
DISTORTION
APPROXIMATED LINE
DISTORTION CHANGE RATE
DISTORTION CHANGE RATE (%)
350%
300%
250%
200%
150%
100%
50%
0%
DISTORTION
0%
-10%
-20%
-30%
-40%
-50%
-60%
-70%
-80%
-90%
-100%
ANGLE OF VIEW (deg)
0
10
20
30
40
50
60
70
80

FIG. 9

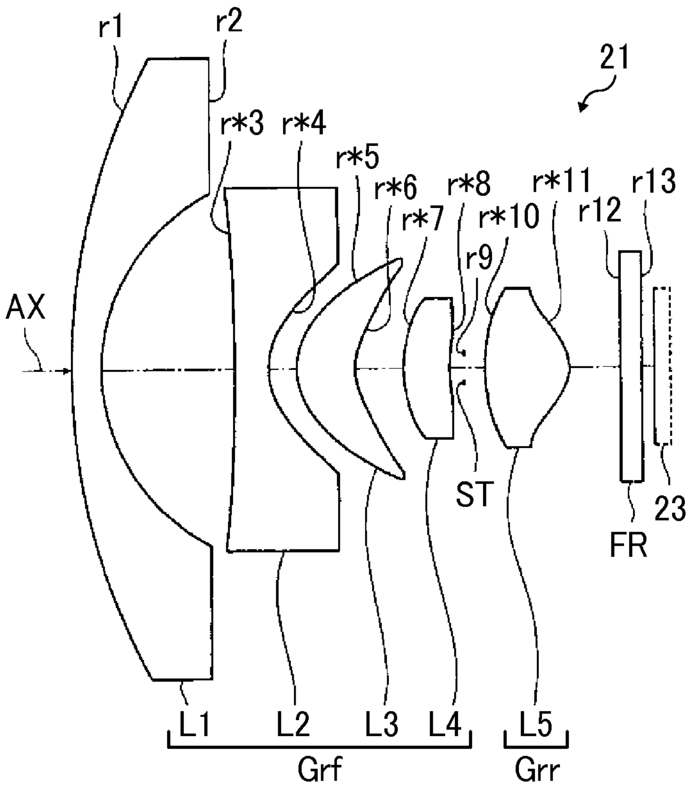
r1
r2
21
r*3
r*4
r*5
r*6
r*7
r*8
r*10
r*11
r12
r13
r9
AX
ST
23
FR
L1
L2
L3
L4
L5
Grf
Grr

FIG. 10A

SPHERICAL ABERRATION DIAGRAM

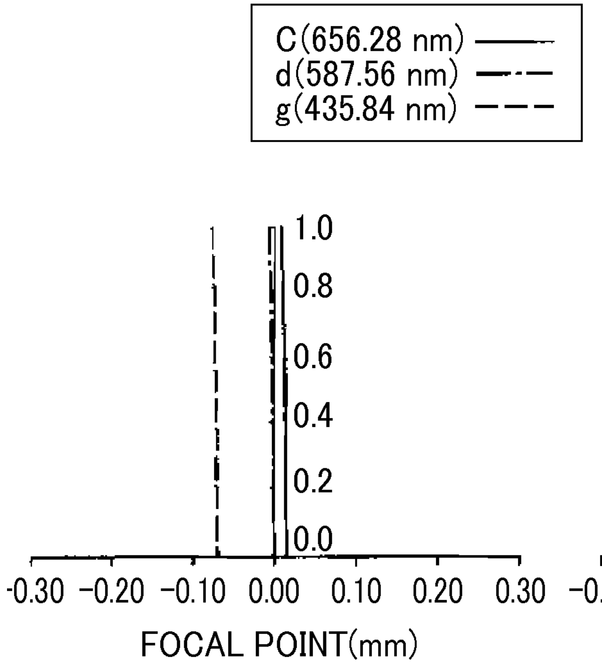


FIG. 10B

ASTIGMATISM ABERRATION DIAGRAM

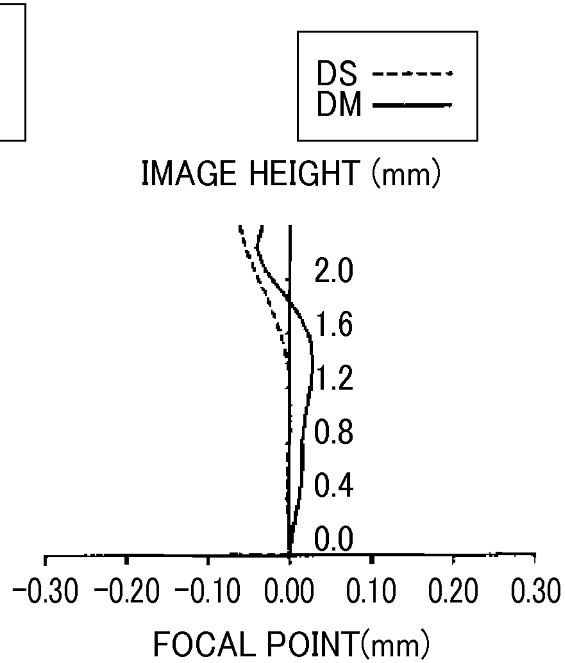


FIG. 10C

DISTORTION ABERRATION DIAGRAM

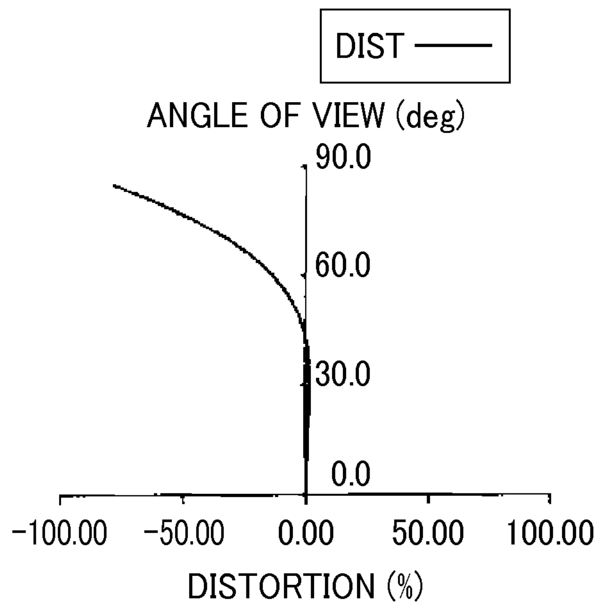

FIG. 11

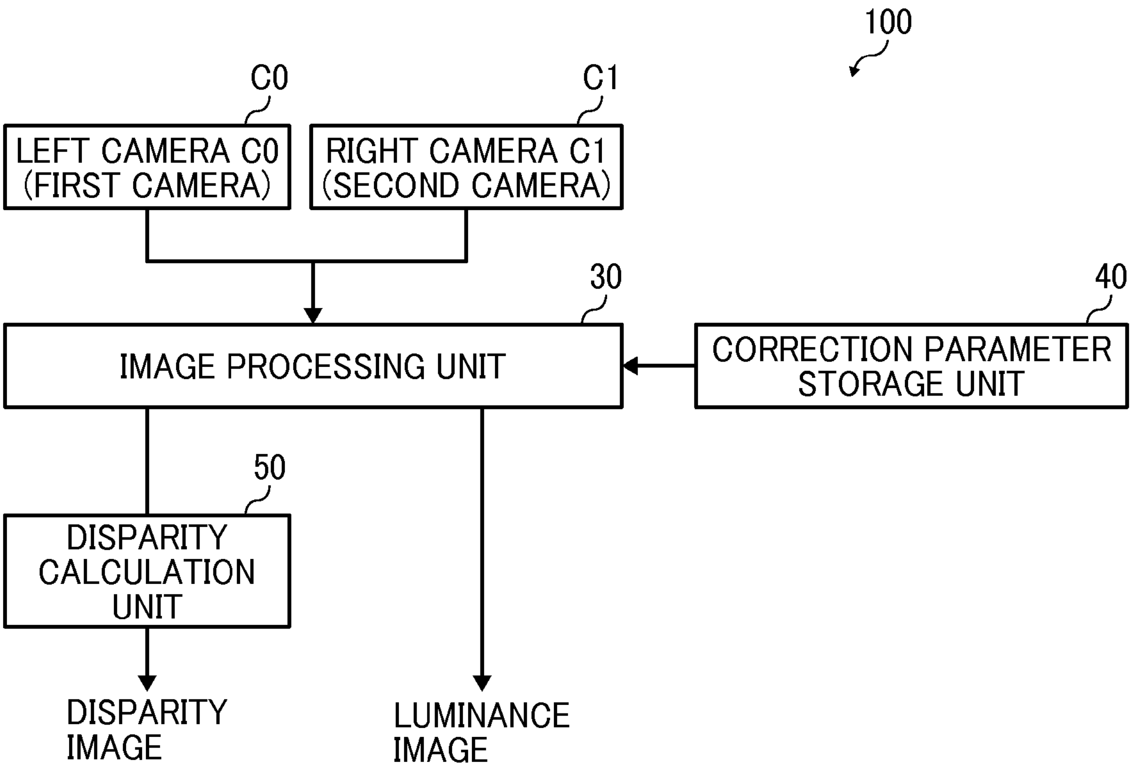
100
C0
C1
LEFT CAMERA C0
(FIRST CAMERA)
RIGHT CAMERA C1
(SECOND CAMERA)
30
40
IMAGE PROCESSING UNIT
CORRECTION PARAMETER
STORAGE UNIT
50
DISPARITY
CALCULATION
UNIT
DISPARITY
IMAGE
LUMINANCE
IMAGE

FIG. 12

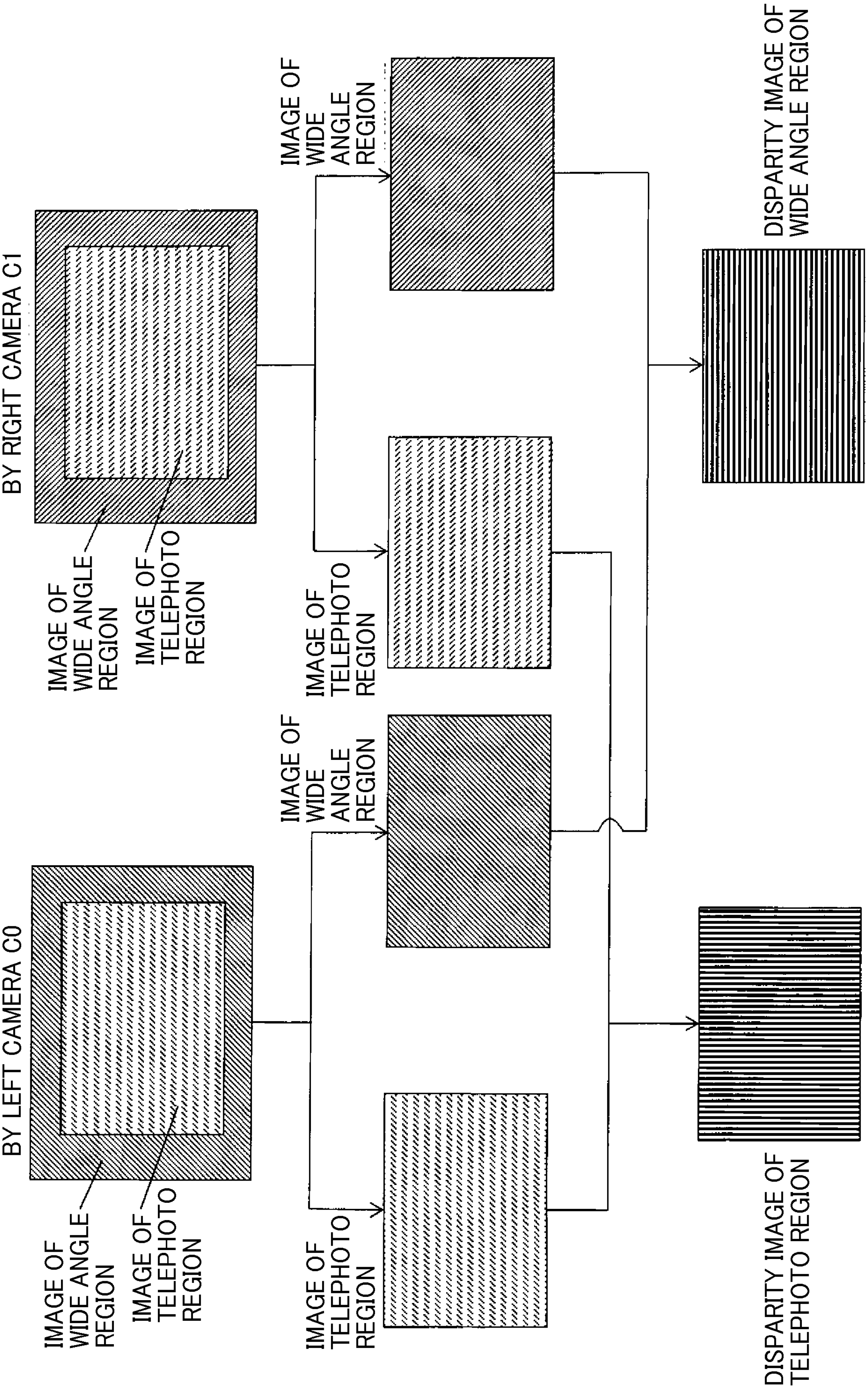
IMAGE DATA CAPTURED BY LEFT CAMERA C0
IMAGE OF WIDE ANGLE REGION
IMAGE OF TELEPHOTO REGION
IMAGE DATA CAPTURED BY RIGHT CAMERA C1
IMAGE OF WIDE ANGLE REGION
IMAGE OF TELEPHOTO REGION
IMAGE OF TELEPHOTO REGION
IMAGE OF WIDE ANGLE REGION
IMAGE OF TELEPHOTO REGION
IMAGE OF WIDE ANGLE REGION
DISPARITY IMAGE OF TELEPHOTO REGION
DISPARITY IMAGE OF WIDE ANGLE REGION

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2012198077 A
- US 2004257677 A1